# EUROPÄISCHE PATENTSCHRIFT

(11) **EP 0 642 729 B1**
(45) Veröffentlichungstag und Bekanntmachung des Hinweises auf die Patenterteilung: **14.05.1997**
(21) Anmeldenummer: 94111112.2
(22) Anmeldetag: 16.07.1994
(51) Int. Cl.: A01C 7/08

(54) **Landwirtschaftliche pneumatische Verteilmaschine**
Agricultural pneumatic distributor
Distributeur pneumatique agricole

(30) Priorität: 11.09.1993 DE 9313779 U
(43) Veröffentlichungstag der Anmeldung: 15.03.1995
(60) Teilanmeldung: 96114671.9
(73) Patentinhaber: Rabewerk GmbH + Co., 49152 Bad Essen (DE)
(72) Erfinder: Clausing, Fritz, Dipl.-Ing., D-49152 Bad Essen (DE)
(74) Vertreter: Missling, Arne, Dipl.-Ing.

(56) Entgegenhaltungen:
- EP-A- 0 376 018
- US-A- 5 028 009
- US-A- 5 074 228

## Beschreibung

Die Erfindung betrifft eine landwirtschaftliche pneumatische Verteilmaschine zum Verteilen eines vorzugsweise körnigen Verteilgutes, insbesondere eines Saatgutes oder eines Düngers, wahrend dessen Ausbringens aus einem Vorratsbehälter auf einen Acker, mit einer Dosiereinrichtung für die dosierte pneumatische Förderung des Verteilgutes aus dem Vorratsbehälter über eine Zuleitung zu einem Verteilerkopf, und mit an dem Verteilerkopf angeschlossenen Verteilerleitungen zur pneumatischen Förderung von jeweils einer Teilmenge des Verteilgutes zu jeweils einem Streuer für das Verteilgut, insbesondere zu einem Säschar oder einem Düngerstreuer, wobei ein Teil der Verteilerleitungen an ihren Abgängen aus dem Verteilerkopf mit Absperreinrichtungen versehen ist, die so geschaltet sein können, daß die Förderung des Verteilgutes zu dem jeweils zugehörigen Streuer unterbunden ist und stattdessen über eine Abzweigung eine jeweils zugehörige Rückleitung geöffnet ist.

Eine solche Verteilmaschine ist aus der EP 0 376 018 A2 bereits bekannt. Sie ist insbesondere zum Verteilen von Saatgut eingerichtet und soll sicherstellen, daß die Saatgutausbringung auf den Acker mit stets gleicher flächenspezifischer Saatmenge erfolgt, unabhängig davon, ob für eine später notwendige Behandlung des aufgelaufenen Saatgutes die Anlage einer Fahrgasse für einen Schlepper erforderlich ist oder nicht.

Derartige Fahrgassen müssen oftmals unvermeidlich angelegt werden,. beispielsweise, wenn Saatkulturen durch schleppergezogene Maschinen einer (zweiten) Düngung unterzogen oder mit Herbiziden behandelt werden sollen; andernfalls würde eine stabile Geradeaus-Fahrt des Schleppers und der optimale Abstand zur nächsten Fahrspur nicht einzuhalten sein, die Kulturen würden in den von den Schlepperrädern überfahrenen Bereichen zerstört und der Ertrag in einer dementsprechenden Größenordnung gemindert.

Es ist davon auszugehen, daß die Anzahl der saatgutfördernden Verteilerleitungen an einem Verteilerkopf bereits ohne Berückichtigung der eventuell zu gerierenden Fahrgassen höher sein kann als erforderlich, weil sie von vielen Einflußfaktoren abhängig ist; umsomehr ist das der Fall, wenn Verteilerleitungen stillgelegt werden müssen, um eine Fahrgasse in der bestellten Kultur zu belassen. Die überflüssigen Verteilerleitungen könnten zwar entfernt werden; dies ist jedoch umständlich, und man behilft sich üblicherweise damit, daß sie einfach abgesperrt und die zugehörigen Streuer entfernt werden. Es muß dann allerdings dafür gesorgt werden, daß die Saatgutausbringung trotzdem gleichmäßig erfolgt und eine optimale Saatdichte überall erzeugt wird. Bereits in der EP 0 252 348 A1 ist zu diesem Zweck vorgesehen, daß nicht einfache Verschlüsse, sondern vielmehr steuerbare Absperreinrichtungen angeordnet werden, die das überschüssige Saatgut über Rückleitungen in den Vorratsbehälter leiten. Alle "aktivierten" Verteilerleitungen und die von ihnen belieferten Säschare erhalten sämtlich die gleiche Fördermenge an Saatgut. Allerdings wird dabei die erforderliche Saatgutmenge weit unterschritten, wenn auf Fahrgassen-Betrieb umgestellt wird. Es ist deshalb erforderlich, dann die Dosierung kurzfristig und in erheblichem Umfang anzuheben. Besonders nachteilig ist es aber, daR die Rückführung großer Saatgutmengen in den Vorratsbehälter erhebliche Probleme bereitet, wenn dieser weit von der übrigen Verteilmaschine entfernt vorgesehen ist.

Von der Erkenntnis ausgehend, daß beiderseits der Fahrgassen eine etwas erhöhte Saatgutausbringung durchaus erwünscht sein kann, weil die dort auflaufenden Kulturen späterhin auch die Fahrgassen als Standraum für ihre Entwicklung benutzen können und demzufolge kein wesentlicher Minderertrag gegenüber fahrgassen-freien Flächen eintritt, ist in der EP 0 376 018 A2 vorgesehen, das für "verschlossene" Verteilerleitungen vorgesehene Saatgut auf die den Fahrgassen benachbarten Säschare umzuleiten.

Auf diese Weise würde nun aber den fahrgassen-benachbarten Säscharen die doppelte Menge an Saatgut zugeführt, und dies ist viel mehr, als für eine gedeihliche Entwicklung der Pflanzen zulässig ist. Es ist auch zu beachten, daß im allgemeinen jeder einem Schlepperrad zugeordneten Fahrgasse mehr als nur ein weggelassenes Säschar gegenübersteht; das bedeutet aber, daß auch aus der Fahrgasse nicht unmittelbar benachbarten Säscharen die doppelte Menge Saatgutes ausgebracht wird, dort also, wo kein zusätzlicher Standraum verfügbar ist. Bei einer solchen Anordnung dürften sich daher Mindererträge beziehungsweise Qualitätsminderungen nicht vermeiden lassen.

Die Erfindung hat sich demzufolge die Aufgabe gestellt, eine Verteilmaschine der eingangs näher bezeichneten Art so auszubilden, daß einerseits den Abgängen des Verteilerkopfes eine beliebig geringere Anzahl von Streuern zugeordnet werden kann und andererseits trotzdem die zugehörige Ackerfläche unabhängig davon stets gleichförmig belegt wird. Außerdem soll es möglich sein, die übrige Verteilmaschine auch weit entfernt von dem Vorratsbehälter vorzusehen.

Erfindungsgemäß wird die Aufgabe dadurch gelöst, daß die Rückleitung bypass-artig in der Zuleitung zu dem Verteilerkopf mündet. Ganz besonders wirkungsvoll ist die erfindungsgemäße Anordnung, wenn dabei die Rückleitung in einem vorzugsweise senkrechten, unmittelbar vor dem Verteilerkopf befindlichen Teil der Zuleitung mündet; es ist aber auch möglich, daß die Rückleitung in einem vorzugsweise gekrümmten, vor dem Verteilerkopf befindlichen Teil der Zuleitung, beispielsweise in einem waagerechten Bereich dieses Teiles und insbesondere an der Stelle mit der größten Krümmung, mündet.

Auf diese Weise werden lange Rückförderleitungen zu dem Vorratsbehälter vermieden, und dieser kann nach statischen Gesichtspunkten dort vorgesehen werden, wo seine Masse (insbesondere, wenn er voll gefüllt ist) die geringsten Probleme bereitet. Das für die geschlossenen Verteilerleitungen berechnete überschüssige Verteilgut wird weder in den Vorratsbehälter zurücktransportiert noch einigen wenigen Verteilerleitungen zugeführt, sondern gleichmäßig in alle übrigen Verteilerleitungen umgeleitet.

Es ist besonders vorteilhaft, wenn die Zuleitung in Förderrichtung vor, vorzugsweise unmittelbar vor dem Anschluß der Rückleitung in die Zuleitung eine düsenartige erste Einziehung ihres Querschnitts aufweist, die so bemessen ist, daß das Verteilgut aus der Rückleitung in die Zuleitung angesaugt wird. Auf diese Weise ist sichergestellt, daß das überschüssige Verteilgut tatsächlich im Kreislauf in die Zuleitung und von dort in den Verteilerkopf zurückbefördert wird. Dieser Kreislauf ist nach kurzer Arbeitszeit der Verteilmaschine stationär, und das überschüssige Verteilgut wird tatsächlich aus der Verteilmaschine gefördert.

Die Wirkungsweise des Verteilerkopfes wird noch verbessert, wenn die Zuleitung vor, vorzugsweise unmittelbar vor ihrer Einmündung in den Verteilerkopf eine düsenartige zweite Einziehung aufweist. Dadurch wird der Förderstrom durch die Zuleitung vor seinem Austritt auf den Verteilerkopf zentriert und erneut beschleunigt.

In vielen Fällen ist es auch hinnehm- oder durch Eingriff in die Dosierung korrigierbar, daß die ausgebrachte Menge an Verteilgut gemindert sein kann und es nicht erforderlich ist, die durch stillgelegte Verteilerleitungen überschüssige Menge in den Kreislauf zurückzufördern. Wenn dann gleichwohl die übrige Verteilmaschine von dem Vorratsbehälter weit entfernt vorgesehen werden muß, dann kann es günstig sein, wenn bei einer Verteilmaschine der eingangs näher bezeichneten Art die Rückleitung in einem von dem Vorratsbehälter getrennten Sammelbehälter mündet. Bei einer solchen Ausführung ist es möglich, daR der Sammelbehälter an oder in der Nähe der übrigen Verteilmaschine, zu dieser ortsfest, vorgesehen und andererseits vorteilhaft lösbar vorgesehen und in den Vorratsbehälter entleerbar ist.

Eine solche, zu der weiter oben beschriebenen völlig eigenständige Anordnung hat mit dieser gleichwohl gemeinsam, daß auch hier die Ausbringung des Verteilgutes völlig gleichmäßig erfolgt, und daß im Gegensatz zu der aus der EP 0 252 348 A1 vorbekannten Verteilmaschine mit gleichfalls erhöhter Förderleistung nunmehr eine von dem Vorratsbehälter unabhängige Ausführung bewerkstelligt werden kann. Der Sammelbehälter kann dabei nach Bedarf geleert werden; sein erforderliches Volumen hält sich in Grenzen und gestattet auch eine manuelle Entleerung in den Vorratsbehälter.

Eine besonders praktische Bauweise ergibt sich, wenn die Absperreinrichtungen in Stutzen vorgesehen sind, die von dem Verteilerkopf trennbar und mit denen die Verteilerleitungen verbindbar sind, wobei vorteilhaft in den Stutzen der absperrbaren Verteilerleitungen jeweils die von der zugehörigen Absperreinrichtung beeinflußte Abzweigung für die Rückleitung vorgesehen ist, denn die Stutzen werden nur an denjenigen Verteilerleitungen gebraucht, die zu den vorgesehenen Fahrgassen führen. Es ist praktisch, wenn die Absperreinrichtungen als elektromagnetisch betätigbare Klappen ausgebildet sind.

Auf diese Weise kann man zusätzlich dafür sorgen, daß der Verteilerkopf an die jeweiligen Bedingungen zunächst ohne Rücksicht darauf, ob einzelne Verteilerleitungen zeitweilig passiviert werden, angepaßt ist.

Die Zuordnung von Rückleitungen zu der Zuleitung läßt sich besonders einfach gestalten, wenn die Abzweigungen jeweils in einem an dem Stutzen - gegebenenfalls abgedichtet - anschließenden Trichter münden, an dem die zugehörige Rückleitung angeschlossen ist; besonders günstig ist es, wenn dabei mindestens zwei Abzweigungen in einem Trichter enden. Auf diese Weise kommt man bei gegebenenfalls mehreren stillgelegten Verteilerleitungen mit nur einer Rückleitung aus.

Die erfindungsgemäße Anordnung ist leicht herstellbar sowohl, wenn die Einziehung rotationssymmetrisch zu der Achse der Zuleitung ausgebildet ist, bei der die Einziehung eine kegelige Mantelfläche aufweisen kann, als auch dann, wenn die Einziehung von einem in der Zuleitung vorgesehenen, vorzugsweise ebenen, den Strömungsquerschnitt in der Zuleitung in Strömungsrichtung sukzessive bis zur Einmündung der Rückleitung vermindernden Düsenblech gebildet wird, wobei das Düsenblech so angeordnet sein kann, daß ein kreisförmiger Strömungsquerschnitt in Strömungsrichtung sukzessive bis zur Einmündung der Rückleitung durch einen in Strömungsrichtung sukzessive sich vergrößernden Kreisabschnitt vermindert wird.

Es ist damit gezeigt, daß die Erfindung ganz verschiedenen konstruktiven Voraussetzungen angepaßt werden kann, so daß eine optimale Ausführung auswählbar ist, ohne die wesentlichen erfinderischen Mermale aufgeben zu müssen.

Die Wirkungsweise kann beispielsweise auch noch dadurch verbessert werden, daß in Strömungsrichtung unmittelbar hinter der Einziehung, beispielsweise in der Zuleitung oder der Rückleitung, eine Zuluftdüse für eine der Umgebung entnommene Zuluft vorgesehen ist. Die damit verbundene Erhöhung der Luftströmung nach der Zuluftdüse reduziert die Verstopfungsgefahr in dem Verteilerkopf und den Verteilerleitungen und entlastet andererseits die Zuleitung.

Die Rückleitung kann absperrbar ausgebildet sein, beispielsweise, indem, vorzugsweise kurz vor ihrer Einmündung in die Zuleitung ein Schieber vorgesehen ist.

Muß während der laufenden Ausbringung von Verteilgut dessen Fördermenge veränderten Bedingungen angepaßt werden, etwa, wenn bei einer Sämaschine einzelne Säschare stillgelegt werden, um eine Fahrgasse herzustellen, dann ist das eine vergleichsweise einfach zu bewerkstelligende Maßnahme. Es ist dann zunächst vorteilhaft, wenn dies nicht durch Manipulation des Verteilerkopfes, sondern dadurch erfolgt, daß eine Fahrgassenschaltung vorgesehen ist, die selbsttätig oder manuell aktivierbar ist und die dabei mittels der Absperreinrichtungen diejenigen Verteilerleitungen absperrt, deren Streuer in dem Weg der Schlepperräder eines die Verteilmaschine bewegenden Schleppers enden. Man kann auf diese Weise die Gestaltung der erforderlichen Parameter vorbestimmen und muß dies nicht in umständlicher Weise auf dem Acker besorgen.

Es ist dabei auch möglich, daß bei aktivierter Fahrgassenschaltung die Dosiereinrichtung so eingeregelt oder -gesteuert wird, daß die ausgebrachte, auf die Bestellfläche bezogene Menge des Verteilgutes sich gegenüber derjenigen bei deaktivierter Fahrgassenschaltung nicht veränderts, so daß, unabhängig von einer generellen Vorbestimmung der auszubringenden Menge an Verteilgut, diese an die sich während des Ausbringens ändernden Bedingungen anpassen oder angepaßt werden kann. Insbesondere hat hier die Verwendung von Bordcomputern Wege eröffnet, daß von der Maschine alle Maßnahmen selbsttätig getroffen werden können, die eine willkürliche Anderung des Sollwertes einer Regelung nach sich ziehen. Die Einzelheiten sind fachüblich und stehen nicht in unmittelbarem Zusammenhang mit der Erfindung, aber sie ermöglichen immerhin deren vorteilhafte Realisierung.

Die Erfindung ist im wesentlichen auf eine Anwendung bei der Ausbringung von Saatgut mit Hilfe entsprechender Sämaschinen gerichtet, sie ist aber darauf keineswegs beschränkt. Wesentlich ist allerdings, daß das Verteilgut in der erfindungsgemäßen Weise überhaupt förderbar ist. Ohne Schwierigkeiten können beispielsweise geeignete Düngemittel gleichermaßen mit einer derartigen Einrichtung ausgebracht werden.

Weitere Vorteile der Erfindung und die näheren Einzelheiten werden nachstehend an Hand der Zeichnung an einem Ausführungsbeispiel näher erläutert. Es zeigen
- Fig.1: eine Gesamtansicht einer erfindungsgemäßen Verteilmaschine,
- Fig.2: eine Einzelheit A aus Fig.1,
- Fig.3: eine Einzelheit B aus Fig.2 in einer gegenüber Fig.1 und 2 etwas veränderten Ausführung,
- Fig.4 und Fig. 4a: je einen Verteilerkopf gemäß Fig.1 mit leicht veränderter Anordnung der Rückleitung und
- Fig. 5: ein weiteres Ausführungsbeispiel gemäß der Erfindung,
sämtlich in schematischer Darstellung.

In der Zeichnung sind nur die für das Verständnis der Wirkungsweise der erfindungsgemäßen Verteilmaschine unverzichtbaren Funktionselemente dargestellt.

Ein Vorratsbehälter 1 für ein auf einem Acker zu verteilendes Verteilgut 2, üblicherweise beispielsweise ein Saatgut, ist ein wesentlicher Teil etwa einer Sämaschine und an dieser starr befestigt. Er ist mit einer Dosiereinrichtung 3 verbunden, die in geeigneter Weise, zumeist in Abhängigkeit von der Fahrgeschwindigkeit des alle Teile tragenden oder bewegenden Schleppers, angetrieben wird. Die dabei im einzelnen zur Verfügung stehenden Möglichkeiten sind nicht Gegenstand der Erfindung und können deshalb übergangen werden, sie sind aber dem Fachmann geläufig. Ein Gebläse 4 erzeugt einen pneumatischen Förderstrom für das Verteilgut 2 in einer Zuleitung 5 und fördert das Verteilgut 2 aus dem Vorratsbehälter 1. Es ist dabei ohne weiteres möglich, den Vorratsbehälter 1, die Dosiereinrichtung 3 und das Gebläse 4 an der Frontseite des Schleppers zu befestigen, so daß eine rückseitige Überlastung von vornherein vermieden wird.

Die übrigen Teile der Verteilmaschine sind stattdessen am Heck des Schleppers vorgesehen. So kann der erforderliche Rahmen für einen Verteilerkopf 6 und die zugehörigen erforderlichen Streuer, beispielsweise die Säschare, deren Aufhängung usw. durch Ober- und Unterlenker einer üblichen Dreipunktaufhängung mit dem Schlepper verbunden und hydraulisch heb- und senkbar sein. Alle diese Einzelheiten stehen ebenfalls in keinem Zusammenhang mit der Erfindung, sind fachüblich und in der Zeichnung deshalb weggelassen worden.

Die am besten flexibel gehaltene Zuleitung 5 endet in einem starren, senkrechten Teil 5a, durch das das Verteilgut 2 senkrecht nach oben transportiert wird. Eine erste und eine zweite Einziehung 5b und 5c des Förderquerschnittes der Zuleitung 5 sorgen düsenartig für eine zumindest zeitweilige Beschleunigung des Förderstromes. Während die zweite Einziehung 5b unmittelbar vor der Einmündung ("5d" entfällt hier!) der Zuleitung 5 in den Verteilerkopf 6 dafür sorgt, daß in den nachfolgenden Förderleitungen der nötige Staudruck bereitgestellt wird, dient die erste Einziehung 5c dazu, in einer Rückleitung 6a einen Unterdruck an der Stelle zu erzeugen, wo diese Rückleitung 6a in die Zuleitung 5 eingebunden ist. Die Rückleitung 6a mündet andererseits in einer absperrbaren Verteilerleitung 71. Eine weitere, aber nicht absperrbare Verteilerleitung 72 wird ebenfalls von der Zuleitung 5 aus mit Verteilgut 2 beliefert. Beide Arten der Verteilerleitungen 7 kommen an dem Verteilerkopf 6 mehrfach vor; die Verteilerleitungen 72 überwiegen.

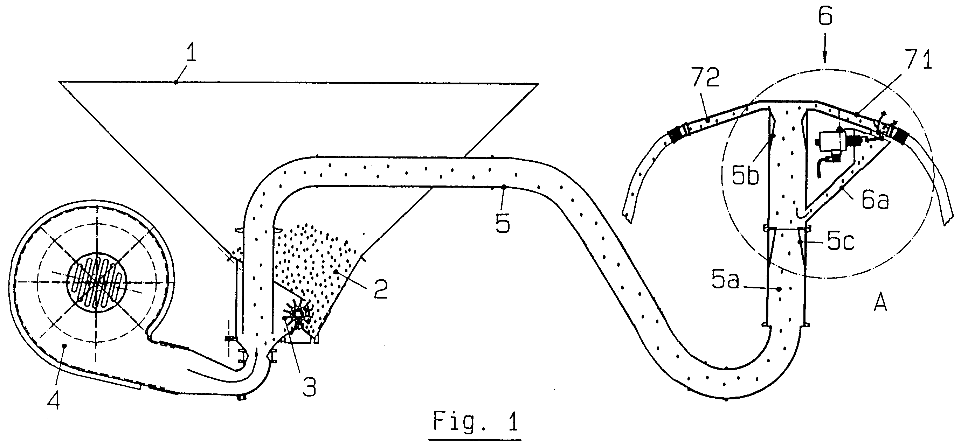

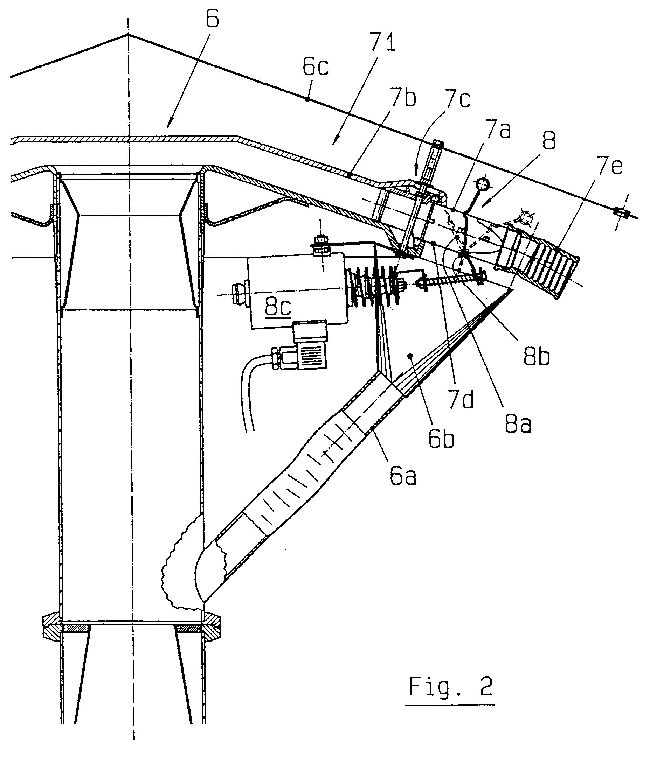

In der etwas vergrößerten Darstellung der Fig.2 ist die in der Fig.1 linke Verteilerleitung 72 weggelassen. Es ist aber nun stattdessen ein Deckel 6c angedeutet, wie er für Verteilerköpfe üblich ist.

Ein Stutzen 7a schließt jeweils an einem Abgang 7b der Verteilerleitungen mittels einer Klemmverbindung 7c der Verteilerleitungen 7 an. In dem Stutzen 7a ist eine Absperreinrichtung 8 vorgesehen. Diese besteht aus einer um eine an dem Stutzen ortsfeste Achse 8b so schwenkbaren Klappe 8a, daß diese wechselweise einen Abzweig 7d zu der Rückleitung 6a und den Förderquerschnitt der Verteilerleitung 71 verschließt. Die Stellung der Klappe 8a wird von der Erregung oder Entregung eines Elektromagneten 8c bestimmt, der an der Klemmverbindung 7c ortsfest arretierbar ist. Die Verteilerleitungen 7 umfassen schließlich an den Stutzen 7a befestigte Förderschläuche 7e, die das Verteilgut 2 zu den in der Zeichnung nicht sichtbaren Streuern transportieren.

Der Abzweig 7d mündet in einem an dem Verteilerkopf 6 ortsfesten Trichter 6b, an den wiederum die Rückleitung 6a anschließt.

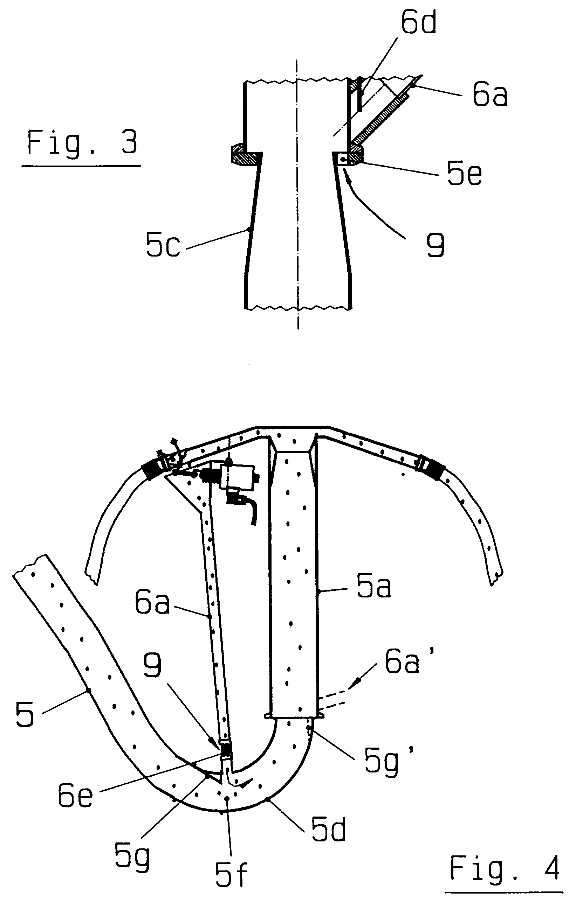

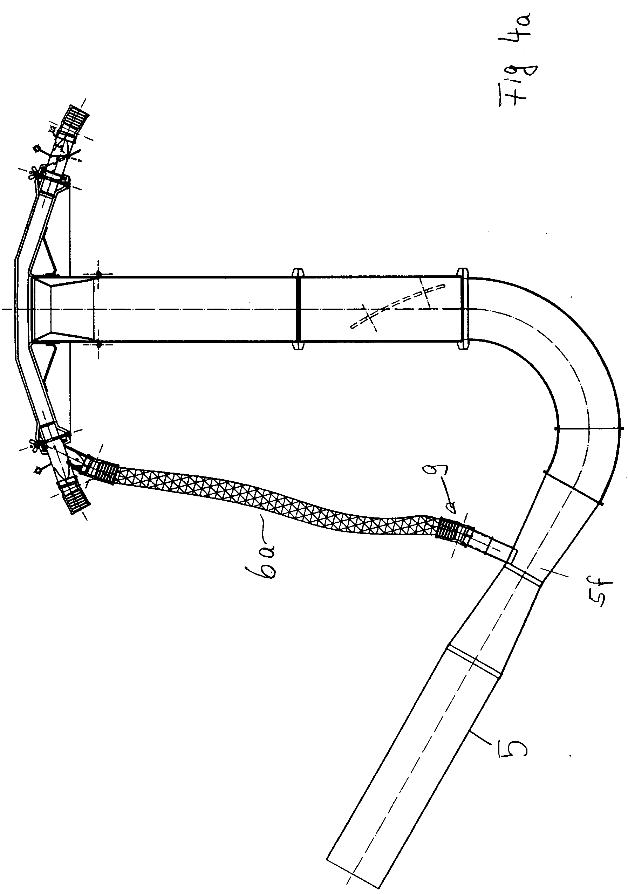

In der Variante der Fig.3 ist - in Strömungsrichtung kurz hinter der Einziehung 5c - eine Zuluftdüse 5e vorgesehen, welche den Förderstrom in der Zuleitung 5 mit der Umgebung verbindet. Der Unterdruck hinter der Einziehung 5c reicht aus, um außer auf die Rückleitung 6 auch noch auf die Umgebung einen Saugdruck auszuüben, so daß durch die Zuluft 9 genügend Förderluft zur Verfügung steht, um stromab eine Verstopfung eines Förderquerschnittes zu vermeiden. In der Fig.3 ist außerdem ein Schieber 6d angedeutet, mit dem die Rückleitung 6a ganz oder teilweise abgesperrt werden kann.

Diese Rückleitung 6a kann auch, wie die Fig.4, 4a zeigen, in einen stromauf an das senkrechte Teil 5a anschließenden, hier als Krümmer ausgebildeten Teil 5d der Zuleitung 5 einmünden, etwa in dessen waagerechtes Teilstück 5f; den Strömungsverhältnissen kommt es dabei entgegen, wenn der Einmündung anstelle einer Einziehung ein flaches Düsenblech 5g vorhergeht, das den Strömungsquerschnitt ebenfalls düsenartig einzieht, jedoch unsymmetrisch zu dem großen Krümmungsradius des Teilstückes 5f hin verschiebend, wo die Strömungsgeschwindigkeit am höchsten ist. Eine Zuluftdüse 6e ist bei dieser Ausführung innerhalb der Rückleitung 6a vorgesehen.

Die spezielle Ausbildung der düsenartigen Einziehung der Zuleitung 5 vor der Einmündung der Rückleitung 6a, wie sie in der Fig.4 gezeigt ist, ergibt wirkungsgemäß das gleiche wie mit einer Anordnung entsprechend Fig.1 bis 3, wobei die Rückleitung 6a' und das Düsenblech 5g' lediglich angedeutet sind.

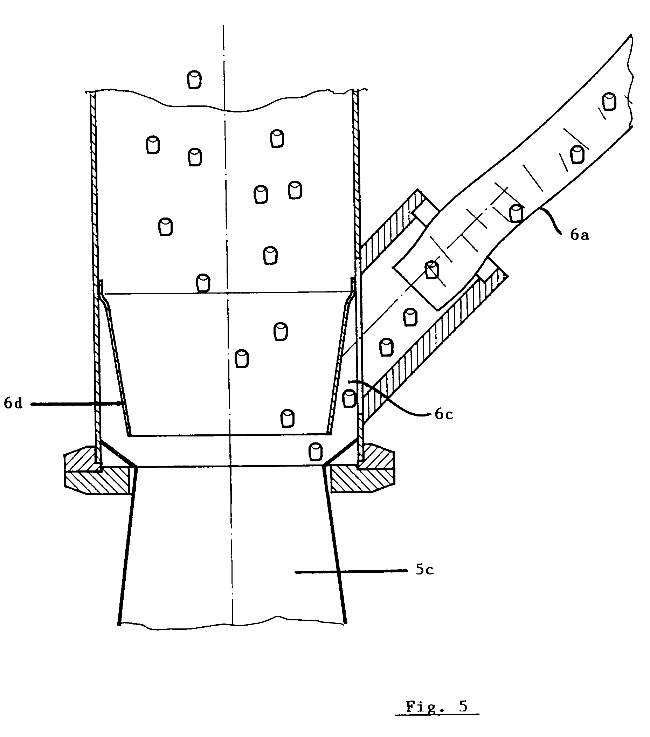

Bei dem Ausführungsbeispiel nach Fig. 5 sind gleiche Teile mit gleichen Bezugszeichen versehen. Bei diesem Ausführungsbeispiel ist das starre senkrechte Teil 5a, durch das das Verteilgut 2 senkrecht nach oben transportiert wird, wie in den Ausführungsbeispielen nach den Fig. 1 bis 4, mit einer düsenartigen Einziehung 5c ausgebildet. Oberhalb der Einziehung 5c endet die Rückleitung 6a. Im Unterschied zu der Ausführungsform nach den Fig. 1 bis 4 ist hier im Bereich der Einmündung 6c der Rückleitung 6a ein konisch ausgebildetes Rohrstück 6d in den senkrechten Teil 5a eingesetzt worden. Dieses konische Rohrstück hat einen zur Einziehung 5c hin gerichteten geringeren Durchmesser, wobei dieser so gewählt ist, daß das Verteilgut 2 in etwa ringförmig in die Zuleitung 5 eingeführt wird. Hierdurch erreicht man eine günstigere Verteilung des rückgeführten Verteilgutes 2.

## Patentansprüche

1. Landwirtschaftliche pneumatische Verteilmaschine zum Verteilen eines vorzugsweise körnigen Verteilgutes (2), insbesondere eines Saatgutes oder eines Düngers bestehend aus einem Vorratsbehälter (1) mit einer Dosiereinrichtung (3) für die dosierte Förderung des Verteilgutes (2) aus dem Vorratsbehälter (1) über eine Zuleitung (5) zu einem Verteilerkopf (6), und mit mehreren an dem Verteilerkopf (6) angeschlossenen Verteilerleitungen (71, 72) zur Zuführung von jeweils einer Teilmenge des Verteilgutes (2) zu jeweils einem Streuer für das Verteilgut (2), insbesondere einem Säschar oder einem Düngerstreuer, wobei zumindest ein Teil der Verteilerleitungen (71) an ihren Abgängen aus dem Verteilerkopf (6) mit Absperreinrichtungen (8) versehen ist, die so schaltbar sind, daß die Förderung des Verteilgutes (2) zu dem jeweils zugehörigen Streuer abgesperrt ist und stattdessen über eine jeweils zugehörige Rückleitung (6a,6a') erfolgt, dadurch gekennzeichnet, daß
die Rückleitung (6a,6a') bypass-artig in der Zuleitung (5) zu dem Verteilerkopf (6) mündet.

2. Verteilmaschine nach Anspruch 1, dadurch gekennzeichnet, daß die Rückleitung (6a,6a') in einem vorzugsweise senkrechten, unmittelbar vor dem Verteilerkopf (6) befindlichen Teil (5a) der Zuleitung (5) mündet.

3. Verteilmaschine nach Anspruch 1, dadurch gekennzeichnet, daß die Rückleitung (6a,6a') in einem vorzugsweise gekrümmten, vor dem Verteilerkopf (6) befindlichen Teil (5d) der Zuleitung (5), beispielsweise in einem waagerechten Bereich (5f) dieses Teiles (5d) und insbesondere an der Stelle mit der größten Krümmung, mündet.

4. Verteilmaschine nach Anspruch 1 bis 3, dadurch gekennzeichnet, daß die Zuleitung (5) in Förderrichtung vor, vorzugsweise unmittelbar vor dem Anschluß der Rückleitung (6a,6a') in die Zuleitung (5) eine düsenartige erste Einziehung (5c) ihres Querschnitts aufweist, die so bemessen ist, daß das Verteilgut (2) aus der Rückleitung (6a,6a') in die Zuleitung (5) angesaugt wird.

5. Verteilmaschine nach einem der Ansprüche 1 bis 4, dadurch gekennzeichnet, daß die Zuleitung (5) vor, vorzugsweise unmittelbar vor ihrer Einmündung in den Verteilerkopf (6) eine düsenartige zweite Einziehung (5b) aufweist.

6. Landwirtschaftliche pneumatische Verteilmaschine zum Verteilen eines vorzugsweise körnigen Verteilgutes, insbesondere eines Saatgutes oder eines Düngers, während dessen Ausbringens aus einem Vorratsbehälter auf einen Acker, mit einer Dosiereinrichtung für die dosierte pneumatische Förderung des Verteilgutes aus dem Vorratsbehälter über eine Zuleitung zu einem Verteilerkopf, und mit an dem Verteilerkopf angeschlossenen Verteilerleitungen zur pneumatischen Förderung von jeweils einer Teilmenge des Verteilgutes zu jeweils einem Streuer für das Verteilgut, insbesondere zu einem Säschar oder einem Düngerstreuer, wobei ein Teil der Verteilerleitungen an ihren Abgängen aus dem Verteilerkopf mit Absperreinrichtungen versehen ist, die so geschaltet sein können, daß die Förderung des Verteilgutes zu dem jeweils zugehörigen Streuer unterbunden ist und stattdessen eine jeweils zugehörige Rückleitung geöffnet ist,
dadurch gekennzeichnet, daß
die Rückleitung (6a, 6a') in einem von dem Vorratsbehälter (1) getrennten Sammelbehälter mündet.

7. Verteilmaschine nach Anspruch 6, dadurch gekennzeichnet, daß der Sammelbehälter an oder in der Nähe der übrigen Verteilmaschine, zu dieser ortsfest, vorgesehen ist.

8. Verteilmaschine nach Anspruch 6 und 7, dadurch gekennzeichnet, daß der Sammelbehälter lösbar vorgesehen und in den Vorratsbehälter (1) entleerbar ist.

9. Verteilmaschine nach einem der Ansprüche 1 bis 8, dadurch gekennzeichnet, daß die Absperreinrichtungen (8) in Stutzen (7a) vorgesehen sind, die von dem Verteilerkopf (6) trennbar und mit denen die Verteilerleitungen (7) verbindbar sind.

10. Verteilmaschine nach einem der Ansprüche 1 bis 9, dadurch gekennzeichnet, daß in den Stutzen (7a) der absperrbaren Verteilerleitungen (71) jeweils die von der zugehörigen Absperreinrichtung (8) beeinflußte Abzweigung (7d) für die Rückleitung (6a,6a') vorgesehen ist.

11. Verteilmaschine nach einem der Ansprüche 1 bis 10, dadurch gekennzeichnet, daß die Absperreinrichtungen (8) als elektromagnetisch betätigbare Klappen ausgebildet sind.

12. Verteilmaschine nach einem der Ansprüche 10 oder 11, dadurch gekennzeichnet, daß die Abzweigungen (7d) jeweils in einem an dem Stutzen (7a) - gegebenenfalls abgedichtet - anschließenden Trichter (6b) münden, an dem die zugehörige Rückleitung (6a,6a') angeschlossen ist.

13. Verteilmaschine nach Anspruch 11, dadurch gekennzeichnet, daß mindestens zwei Abzweigungen (7d) in einem Trichter (6b) enden.

14. Verteilmaschine nach einem der Ansprüche 4 bis 13, dadurch gekennzeichnet, daß die Einziehung (5c) rotationssymmetrisch zu der Achse der Zuleitung (5) ausgebildet ist.

15. Verteilmaschine nach Anspruch 14, dadurch gekennzeichnet, daß die Einziehung (5c) eine kegelige Mantelfläche aufweist.

16. Verteilmaschine nach einem der Ansprüche 4 bis 13, dadurch gekennzeichnet, daß die Einziehung (5c) von einem in der Zuleitung (5) vorgesehenen, vorzugsweise ebenen, den Strömungsquerschnitt in der Zuleitung (5) in Strömungsrichtung sukzessive bis zur Einmündung der Rückleitung (6a,6a') vermindernden Düsenblech (5g,5g') gebildet wird.

17. Verteilmaschine nach Anspruch 16, dadurch gekennzeichnet, daß das Düsenblech (5g,5g') so angeordnet ist, daß ein kreisförmiger Strömungsquerschnitt in Strömungsrichtung sukzessive bis zur Einmündung der Rückleitung (6a,6a') durch einen in Strömungsrichtung sukzessive sich vergrößernden Kreisabschnitt vermindert wird.

18. Verteilmaschine nach einem der Ansprüche 1 bis 17, dadurch gekennzeichnet, daß in Strömungsrichtung unmittelbar hinter der Einziehung (5c), beispielsweise in der Zuleitung (5) oder der Rückleitung (6a,6a'), eine Zuluftdüse (5e,6e) für eine der Umgebung entnommene Zuluft (9) vorgesehen ist.

19. Verteilmaschine nach einem der Ansprüche 1 bis 18, dadurch gekennzeichnet, daß die Rückleitung (6a,6a') absperrbar ausgebildet ist.

20. Verteilmaschine nach Anspruch 19, dadurch gekennzeichnet, daß in der Rückleitung (6a,6a'), vorzugsweise kurz vor ihrer Einmündung in die Zuleitung (5), ein Schieber (6d) vorgesehen ist.

21. Verteilmaschine nach einem der Ansprüche 1 bis 20, dadurch gekennzeichnet, daß eine Fahrgassenschaltung vorgesehen ist, die selbsttätig oder manuell aktivierbar ist und die dabei mittels der Absperreinrichtungen (8) diejenigen Verteilerleitungen (71) absperrt, deren Streuer in dem Weg der Schlepperräder eines die Verteilmaschine bewegenden Schleppers enden.

22. Verteilmaschine nach Anspruch 21, dadurch gekennzeichnet, daß bei aktivierter Fahrgassenschaltung die Dosiereinrichtung (3) so eingeregelt oder -gesteuert wird, daß die ausgebrachte, auf die Bestellfläche bezogene Menge des Verteilgutes (2) sich gegenüber derjenigen bei deaktivierter Fahrgassenschaltung nicht verändert.

23. Verteilmaschine nach einem der Ansprüche 4 bis 22, dadurch gekennzeichnet, daß strömungsmäßig gesehen oberhalb der Einziehung (5c) ein konischer Rohrabschnitt eingesetzt ist, der sich entgegen der Strömungsrichtung hin verjüngt und der die Rückleitung (6a) ganz oder teilweise übergreift.

## Claims

1. An agricultural pneumatic distributing machine for distributing a preferably granular distribution material (2), more particularly seeds or fertilizer, consisting of a hopper (1) with a metering device (3) for the metered delivery of the distribution material (2) from the hopper (1) via a feed line (5) to a distributor head (6), and comprising several distributor lines (71, 72) connected to the distributor head (6) for supplying part quantities of the distribution material (2) to respective spreaders for the distribution material (2), more particularly drill coulters or fertilizer spreaders, at least a part of the distributor lines (71) being provided at their exits from the distributor head (6) with shut-off devices (8) which may be operated so that the delivery of the distribution material (2) to the respective associated spreader is shut off and instead takes place via a respective associated return line (6a, 6a'), characterised in that the return line (6a, 6a') opens into the feed line (5) to the distributor head (6) in the manner of a bypass.

2. A distributing machine according to claim 1, characterised in that the return line (6a, 6a') opens into a preferably perpendicular part (5a) of the feed line (5) which is situated immediately upstream of the distributor head (6).

3. A distributing machine according to claim 1, characterised in that the return line (6a, 6a') opens into a preferably curved part (5d) of the feed line (5) which is situated upstream of the distributor head (6), for instance in a horizontal region (5f) of this part (5d) and more particularly at the point of greatest curvature.

4. A distributing machine according to claim 1 to 3, characterised in that upstream, preferably immediately upstream, of the connection of the return line (6a, 6a') to the feed line (5), in the delivery direction, the feed line (5) has a nozzle-like first constriction (5c) of its cross-section which is so dimensioned that the distribution material (2) is drawn out of the return line (6a, 6a') into the feed line (5) by suction.

5. A distributing machine according to one of claims 1 to 4, characterised in that the feed line (5) has a nozzle-like second constriction (5b) upstream, preferably immediately upstream, of its opening into the distributor head (6).

6. An agricultural pneumatic distributing machine for distributing a preferably granular distribution material, more particularly seeds or fertilizer, during the application thereof from a hopper onto a field, comprising a metering device for the metered pneumatic delivery of the distribution material from the hopper via a feed line to a distributor head, and comprising distributor lines connected to the distributor head for the pneumatic delivery of part quantities of the distribution material to respective spreaders for the distribution material, more particularly drill coulters or fertilizer spreaders, a part of the distributor lines being provided at their exits from the distributor head with shut-off devices which may be operated so that the delivery of the distribution material to the respective associated spreader is stopped and instead a respective associated return line is opened, characterised in that the return line (6a, 6a') opens into a collecting container which is separate from the hopper (1).

7. A distributing machine according to claim 6, characterised in that the collecting container is provided on or in the vicinity of the rest of the distributing machine, and is fixed in relation thereto.

8. A distributing machine according to claim 6 and 7, characterised in that the collecting container is provided so that it is detachable and can be emptied into the hopper (1).

9. A distributing machine according to one of claims 1 to 8, characterised in that the shut-off devices (8) are provided in pipe stubs (7a) which are separable from the distributor head (6) and to which the distributor lines (7) may be connected.

10. A distributing machine according to one of claims 1 to 9, characterised in that provided in each of the pipe stubs (7a) of the distributor lines (71) which may be shut off is the branch line (7d) for the return line (6a, 6a') which is affected by the associated shut-off device (8).

11. A distributing machine according to one of claims 1 to 10, characterised in that the shut-off devices (8) are in the form of electromagnetically operable valves.

12. A distributing machine according to one of claims 10 or 11, characterised in that the branch lines (7d) each open into a funnel (6b) which is connected to the pipe stub (7a) - and is sealed if appropriate - and to which the associated return line (6a, 6a') is connected.

13. A distributing machine according to claim 11, characterised in that at least two branch lines (7d) end in a funnel (6b).

14. A distributing machine according to one of claims 4 to 13, characterised in that the constriction (5c) is made rotationally symmetrical to the axis of the feed line (5).

15. A distributing machine according to claim 14, characterised in that the constriction (5c) has a conical surface.

16. A distributing machine according to one of claims 4 to 13, characterised in that the constriction (5c) is formed by a preferably plane nozzle plate (5g, 5g') which is provided in the feed line (5) and successively reduces the flow cross-section in the feed line (5) in the direction of flow up to the junction of the return line (6a, 6a').

17. A distributing machine according to claim 16, characterised in that the nozzle plate (5g, 5g') is positioned such that a circular flow cross-section is successively reduced in the direction of flow up to the junction of the return line (6a, 6a') by means of a circular segment which increases successively in the direction of flow.

18. A distributing machine according to one of claims 1 to 17, characterised in that immediately downstream of the constriction (5c) in the direction of flow, for instance in the feed line (5) or the return line (6a, 6a'), there is provided an air inlet nozzle (5e, 6e) for intake air (9) taken from the environment.

19. A distributing machine according to one of claims 1 to 18, characterised in that the return line (6a, 6a') is designed so that it can be shut off.

20. A distributing machine according to claim 19, characterised in that a slide (6d) is provided in the return line (6a, 6a'), preferably just upstream of its junction with the feed line (5).

21. A distributing machine according to one of claims 1 to 20, characterised in that a tramlining control is provided which may be activated automatically or manually and which, by means of the shut-off devices (8), shuts off the distributor lines (71) whose spreaders end in the track of the tractor wheels of a tractor moving the distributing machine.

22. A distributing machine according to claim 21, characterised in that when the tramlining control is activated, the metering device (3) is adjusted or controlled such that the amount of distribution material (2) produced relative to the area being cultivated does not vary from that produced when the tramlining control is deactivated.

23. A distributing machine according to one of claims 4 to 22, characterised in that, viewed in the direction of flow, a conical pipe section is inserted above the constriction (5c) which tapers in the opposite direction to the direction of flow and which completely or partly overlaps the return line (6a).

## Revendications

1. Machine agricole distributrice pneumatique destinée à distribuer un produit (2) de préférence en grains, en particulier des semences ou un engrais, comportant un réservoir de stockage (1) comportant un dispositif doseur (3) pour le transport dosé du produit à distribuer (2) à partir du réservoir de stockage (1) à travers une conduite d'amenée (5) jusqu'à une tête distributrice (6), et plusieurs conduites de répartition (71, 72) reliées à la tête distributrice (6) pour amener respectivement une quantité partielle du produit à distribuer (2) à respectivement un dispositif pour répandre le produit à distribuer (2), en particulier un semoir ou un dispositif pour répandre de l'engrais, une partie au moins des conduites de distribution (71) étant pourvue à leur sortie de la tête distributrice (6) de dispositifs d'obturation (8) qui peuvent être commandés de telle manière que le transport du produit à distribuer (2) vers le dispositif adéquat respectif pour répandre le produit soit bloqué et, à la place, se fasse par une conduite de retour (6a, 6a') appropriée respective,
caractérisée en ce que la conduite de retour (6a, 6a') débouche en dérivation dans la conduite d'amenée (5) conduisant à la tête distributrice (6).

2. Machine distributrice selon la revendication 1, caractérisée en ce que la conduite de retour (6a, 6a') débouche dans une partie (5a), de préférence verticale, de la conduite d'amenée (5) qui se trouve immédiatement avant la tête distributrice (6).

3. Machine distributrice selon la revendication 1, caractérisée en ce que la conduite de retour (6a, 6a') débouche dans une partie (5d), de préférence courbe, de la conduite d'amenée (5) qui se trouve immédiatement avant la tête distributrice (6), par exemple dans une zone horizontale (5f) de cette partie (5d) et en particulier à l'endroit de la plus grande courbure.

4. Machine distributrice selon l'une des revendications 1 à 3, caractérisée en ce que la conduite d'amenée (5) présente dans la direction de transport, de préférence immédiatement avant le raccordement de la conduite de retour (6a, 6a') dans la conduite d'amenée (5), un premier rétrécissement (5c) en forme de tuyère de sa section transversale, qui est dimensionnée de manière que le produit à distribuer (2) soit aspiré de la conduite de retour (6a, 6a') dans la conduite d'amenée(5).

5. Machine distributrice selon l'une des revendications 1 à 4, caractérisée en ce que la conduite d'amenée (5) présente, de préférence immédiatement avant son embouchure dans la tête distributrice, (6) un deuxième rétrécissement (5b) en forme de tuyère.

6. Machine agricole distributrice pneumatique destinée à distribuer un produit (2) de préférence en grains, en particulier des semences ou un engrais, pendant qu'il sort d'un réservoir de stockage sur un champ, comprenant un dispositif doseur pour le transport pneumatique dosé du produit à distribuer du réservoir de stockage à travers une conduite à une tête distributrice (6), et comprenant des conduites de distribution reliées à la tête distributrice en vue du transport pneumatique de quantités successives partielles du produit à distribuer à un dispositif respectif pour répandre le produit à distribuer, en particulier un semoir ou un dispositif pour répandre de l'engrais, une partie des conduites de distribution étant pourvue de dispositifs d'obturation à leurs sorties de la tête distributrice, qui peuvent être commandées de telle manière que le transport du produit à distribuer soit interrompu vers le dispositif correspondant pour répandre le produit et que, à la place, une conduite de retour respective correspondante soit ouverte,
caractérisée en ce que la conduite de retour (6a, 6a') débouche dans un réservoir collecteur séparé du réservoir de stockage (1).

7. Machine distributrice selon la revendication 6, caractérisée en ce que le réservoir collecteur est prévu dans ou près du reste de la machine distributrice, fixe par rapport à celle-ci.

8. Machine distributrice selon les revendications 6 et 7, caractérisée en ce que le réservoir collecteur est prévu amovible et peut être vidé dans le réservoir de stockage (1).

9. Machine distributrice selon l'une des revendications 1 à 8, caractérisée en ce que les dispositifs d'obturation (8) sont prévus dans des tubulures (7a) qui sont séparables de la tête distributrice (6) et avec lesquelles les conduites de distribution (7) sont raccordables.

10. Machine distributrice selon l'une des revendications 1 à 9, caractérisée en ce que l'embranchement (7d) placé sous l'influence du dispositif obturateur (8) adéquat pour la conduite de retour (6a, 6a') est prévu respectivement dans les tubulures (7a) des conduites de distribution (71) obturables.

11. Machine distributrice selon l'une des revendications 1 à 10, caractérisée en ce que les dispositifs d'obturation (8) sont constitués par des volets à commande électromagnétique.

12. Machine distributrice selon l'une des revendications 10 ou 11, caractérisée en ce que les embranchements (7d) débouchent respectivement dans un entonnoir (6b) qui se raccorde à la tubulure (7a) - éventuellement de manière étanche -, entonnoir auquel est raccordée la conduite de retour (6a, 6a') correspondante.

13. Machine distributrice selon la revendication 11, caractérisée en ce que deux embranchements (7d) au moins se terminent dans un entonnoir (6b).

14. Machine distributrice selon l'une des revendications 4 à 13, caractérisée en ce que le rétrécissement (5c) présente une symétrie de rotation par rapport à l'axe de la conduite d'amenée (5).

15. Machine distributrice selon la revendication 14, caractérisée en ce que le rétrécissement (5c) présente une surface latérale conique.

16. Machine distributrice selon l'une des revendications 4 à 13, caractérisée en ce que le rétrécissement (5c) est formé par une tôle de tuyère (5g, 5g') prévue dans la conduite d'amenée (5),et de préférence de forme plane, réduisant progressivement la section transversale de l'écoulement dans la conduite (5) dans la direction de l'écoulement jusqu'à l'embouchure de la conduite de retour (6a, 6a').

17. Machine distributrice selon la revendication 16, caractérisée en ce que la tôle de tuyère (5g, 5g') est disposée de telle manière qu'une section transversale circulaire de l'écoulement soit réduite progressivement dans la direction de l'écoulement jusqu'à l'embouchure de la conduite de retour (6a, 6a') par un segment de cercle qui s'agrandit progressivement dans la direction de l'écoulement.

18. Machine distributrice selon l'une des revendications 1 à 17, caractérisée en ce qu'il est prévu, dans la direction de l'écoulement immédiatement derrière le rétrécissement (5c), par exemple dans la conduite d'amenée (5) ou la conduite de retour (6a, 6a'), un orifice de prise d'air (5e, 6e) pour amener de l'air supplémentaire (9) prélevé dans l'environnement.

19. Machine distributrice selon l'une des revendications 1 à 18, caractérisée en ce que la conduite de retour (6a, 6a') est obturable.

20. Machine distributrice selon la revendication 19, caractérisée en ce qu'une vanne (6d) est prévue dans la conduite d'alimentation (6a, 6a'), de préférence peu avant son embouchure dans la conduite d'amenée (5).

21. Machine distributrice selon l'une des revendications 1 à 20, caractérisée en ce qu'il est prévu un sélecteur de trajets qui peut être actionnée automatiquement ou manuellement et qui obture ainsi, au moyen des dispositifs d'obturation (8), les conduites distributrices (71 dont les dispositifs pour répandre le produit se terminent dans le chemin des roues d'un tracteur déplaçant la machine distributrice.

22. Machine distributrice selon la revendication 21, caractérisée en ce que, lorsque le sélecteur de trajets est activé, le dispositif doseur (3) est réglé ou commandé de telle manière que la quantité délivrée du produit à distribuer (2), rapportée à la surface cultivée, ne varie pas vis-à-vis de celle correspondant au sélecteur désactivé.

23. Machine distributrice selon l'une des revendications 4 à 22, caractérisée en ce que, vu dans le sens de l'écoulement, est installée en amont du rétrécissement (5c) une partie de tube conique qui se rétrécit à l'opposé de la direction de l'écoulement et qui empiète totalement ou partiellement sur la conduite de retour (6a).
